# FASCICULE DE BREVET EUROPEEN

(11) **EP 2 825 441 B1**
(45) Date de publication et mention de la délivrance du brevet: **14.06.2017**
(21) Numéro de dépôt: 13710350.3
(22) Date de dépôt: 12.03.2013
(51) Int. Cl.: B62J 1/00

(54) **ASSISE ERGONOMIQUE ET DYNAMIQUE COMPRENANT DEUX SELLETTES**
ERGONOMISCHER UND DYNAMISCHER SITZ MIT ZWEI SÄTTELN
ERGONOMIC AND DYNAMIC SEAT COMPRISING TWO SADDLES

(30) Priorité: 13.03.2012 FR 1252263
(43) Date de publication de la demande: 21.01.2015
(73) Titulaire: Inawa, 21250 Lechatelet (FR)
(72) Inventeur: MATRAY, Benjamin, F-39570 Macornay (FR); PANZUTI, Adrien, F-21000 Dijon (FR)
(74) Mandataire: Lavoix
(86) Numéro de dépôt international: PCT/EP2013/055002
(87) Numéro de publication internationale: WO 2013/135697

(56) Documents cités:
- WO-A1-00/09386
- US-A- 620 620
- US-A1- 2008 054 689

## Description

L'invention a trait à une assise ergonomique et dynamique, notamment pour vélo, destinée à supporter le bassin et le haut des cuisses d'un utilisateur installé sur cette assise. Au sens de la présente invention, un vélo peut être une bicyclette destinée à rouler sur une route ou un chemin ou un cycle ergomètre destiné à être utilisé en intérieur pour la pratique d'exercices physiques.

Dans le domaine des selles pour vélo, il est connu de réaliser une selle en plusieurs assises destinées à être déplacées les unes par rapport aux autres pour accompagner les mouvements du bassin et des cuisses. Il est ainsi connu de EP-A-1 813 515 de diviser une selle de vélo en deux sièges reliés l'un à l'autre par un système mécanique prévu pour que ces sièges se déplacent selon un mouvement de translation alternée. En outre, ces sièges peuvent chacun pivoter autour d'un axe transversal et perpendiculaire à la direction d'avance, c'est-à-dire à un axe de tangage. Le mouvement des sièges en lacet est lié géométriquement au mouvement de roulis des assises. Cela peut contraindre le bassin, lors de ses mouvements.

D'autres selles sont connues de WO-A-96/05998, FR-A-2 824 526, ou EP-A-2 003 046, avec une structure d'assise ne comportant pas deux assises distinctes, de sorte qu'il n'est pas possible de générer des mouvements de tangage de parties de la selle pour accompagner les mouvements des jambes et du bassin sur les deux côtés gauche et droit du vélo.

Par ailleurs, US-A-4 387 925 enseigne d'utiliser deux sellettes pivotantes et réglables en écartement dans une selle de vélo. Les mouvements du bassin et des cuisses sont relativement artificiels car bloqués en roulis et en lacet.

WO-A-00/09386 propose d'utiliser une tige élastiquement déformable pour supporter des blocs de pivotement dans lesquels sont définies des rotules d'articulation de sellettes. Des mouvements de lacet, induits par les mouvements d'un utilisateur, sont possibles grâce à un montage pivotant de la tige autour d'une goupille distincte de la tige élastiquement déformable. Aucun effet élastique n'est obtenu.

US-A-620 620 envisage l'utilisation d'organes élastiques pour amortir un mouvement de lacet. Les éventuels mouvements de roulis ne sont pas pris en compte.

Des problèmes analogues se posent dans le domaine des sièges de travail.

C'est à ces inconvénients qu'entend plus particulièrement remédier l'invention en proposant un nouveau mécanisme d'assise ergonomique et dynamique permettant d'obtenir un meilleur accompagnement biomécanique des mouvements du bassin et des cuisses, tout en assurant une bonne tenue et une résistance adaptée à certains mouvements.

A cet effet, l'invention concerne une assise comprenant deux sellettes ainsi qu'une structure de montage des sellettes par rapport à un cadre, cette structure comportant un châssis destiné à être fixé sur le cadre et des moyens d'articulation de chaque sellette indépendamment de l'autre sellette par rapport au châssis, autour d'un axe de tangage supporté ou formé par un berceau pourvu de deux pions alignés sur l'axe de tangage et sur lesquels les sellettes sont articulées. Conformément à l'invention, le berceau est monté sur le châssis avec interposition d'au moins un élément élastiquement déformable, disposé entre le châssis et le berceau le long d'un axe de lacet de l'assise et apte à se déformer élastiquement en compression lors d'un mouvement de roulis du berceau par rapport au châssis et en torsion ou en cisaillement lors d'un mouvement de lacet du berceau par rapport au châssis, ces mouvements étant indépendants l'un de l'autre et induits par les déplacements du bassin et des jambes d'un utilisateur.

L'assise ergonomique et dynamique conforme à l'invention permet donc d'accommoder des mouvements du bassin et des cuisses d'un utilisateur correspondant à des rotations à la fois autour d'un axe de tangage, d'un axe de roulis et d'un axe de lacet, ces trois rotations étant indépendantes l'une de l'autre. Au sens de l'invention, deux mouvements, tels que les mouvements de roulis et de lacet, sont indépendants lorsqu'ils sont possibles l'un sans l'autres. Ainsi, l'élément élastiquement déformable permet des mouvements de roulis et de lacet différentiés grâce à sa déformation élastique dans les conditions normales d'utilisation de l'assise. En outre, l'utilisation d'un même élément déformable pour accompagner les mouvements de roulis et de lacet confère une bonne compacité au système mécanique de la présente invention.

Selon des aspects avantageux mais non obligatoires de l'invention, une telle assise peut incorporer une ou plusieurs des caractéristiques suivantes prises dans toute combinaison techniquement admissible :
- L'élément interposé entre le berceau et le châssis comprend une couche de matériau synthétique ou composite, notamment de polyuréthane ou d'élastomère, disposée entre deux plaques de rigidité supérieure à celle de la couche de matériau synthétique.
- L'élément interposé entre le berceau et le châssis comprend deux gorges de réception de parties du berceau et des massifs ménagés de part et d'autre de chaque gorge travaillent en cisaillement lors des mouvements de lacet.
- Le mouvement de rotation de chaque sellette, autour de l'axe de tangage et par rapport au berceau, est limité par une butée souple dans chaque sens de rotation.
- Les butées qui limitent la rotation d'une sellette dans les deux sens ont des duretés différentes.
- Les butées souples sont rapportées sur le berceau. En variante, ces butées sont monobloc avec l'élément élastiquement déformable.
- L'élément élastiquement déformable est soumis à un effort de compression parallèle à l'axe de lacet et la structure de montage comprend des moyens de réglage de cet effort de compression. Dans ce cas, on peut prévoir que ces moyens de réglage permettent, soit un ajustement incrémentiel de l'effort de compression, soit un ajustement continu de cet effort.
- L'élément élastiquement déformable est immobilisé, en rotation autour d'un axe de lacet, par coopération de forme avec le châssis et/ou avec le berceau. En particulier, le châssis et/ou le berceau peut définir un logement de réception partielle et de coincement de l'élément élastiquement déformable, en rotation autour de l'axe de lacet, ce logement étant de forme complémentaire de celle de l'élément élastiquement déformable.
- L'élément élastiquement déformable est sélectionné dans un jeu d'éléments élastiquement déformables dont les propriétés mécaniques sont différentes.

L'invention sera mieux comprise et d'autres avantages de celle-ci apparaîtront plus clairement à la lumière de la description qui va suivre de cinq modes de réalisation d'une assise conforme à son principe, donnée uniquement à titre d'exemple et faite en référence aux dessins annexés dans lesquels :
- la figure 1 est une représentation schématique en vue de côté d'un vélo équipé d'une assise conforme à l'invention ;
- la figure 2 est une vue en perspective éclatée de l'assise équipant le vélo de la figure 1 ;
- la figure 3 est une vue en perspective éclatée, selon un autre angle, de l'assise de la figure 2 ;
- la figure 4 est vue par l'arrière de l'assise des figures 2 et 3 ;
- la figure 5 est une coupe à plus petite échelle selon la ligne V-V à la figure 4 ;
- la figure 6 est une vue en perspective analogue à la figure 2 pour une assise conforme à un deuxième mode de réalisation de l'invention ;
- la figure 7 est une vue analogue à la figure 5 pour l'assise du deuxième mode de réalisation ;
- la figure 8 est une vue analogue à la figure 7 lorsque l'assise est dans une deuxième configuration d'utilisation ;
- la figure 9 est une vue en perspective par le dessous de certains éléments constitutifs d'une structure de montage d'une assise conforme à un troisième mode de réalisation de l'invention ;
- la figure 10 est une vue en perspective, selon un autre angle, des éléments de l'assise représentée à la figure 9 ;
- la figure 11 est une vue en perspective par le dessous de certains éléments constitutifs d'une structure de montage de l'assise conforme à un quatrième mode de réalisation de l'invention ;
- la figure 12 est une vue de côté de la partie de l'assise représentée à la figure 11 ;
- la figure 13 est une vue de côté analogue à la figure 12 lorsque l'assise est dans une autre configuration d'utilisation ;
- la figure 14 est une vue en perspective partielle par le dessous de l'assise conforme à un cinquième mode de réalisation de l'invention ;
- la figure 15 est une vue en perspective partielle de l'assise de la figure 14, avec certains éléments complémentaires ajoutés ;
- la figure 16 est une coupe partielle de principe dans le plan XVI à la figure 15.

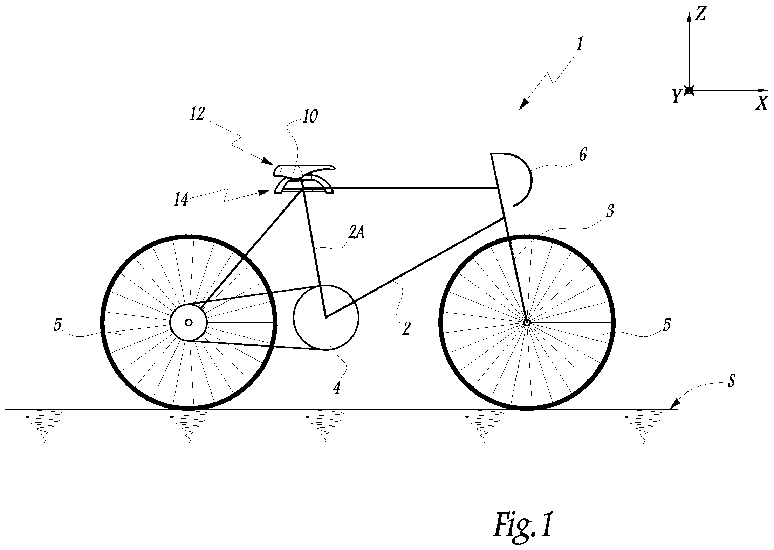

Le vélo 1 représenté à la figure 1 comprend un cadre 2 équipé d'une fourche avant 3 et d'un pédalier 4. Ce vélo comprend également deux roues 5, un guidon 6 et une selle 10 formant l'assise conforme à l'invention et rapportée sur le cadre 2, en partie supérieure d'un tube 2A sensiblement vertical de ce cadre. Le vélo 1 repose sur la surface S du sol et on considère un repère orthogonal XYZ dont l'axe X est aligné avec une direction longitudinale d'avance du vélo 1, alors que son axe Y s'étend horizontalement et perpendiculairement à l'axe X et que son axe Z s'étend verticalement vers le haut, perpendiculairement aux axes X et Y. Les mouvements de rotation autour d'un axe parallèle à l'axe X sont des mouvements de roulis. Les mouvements de rotation autour d'un axe parallèle à l'axe Y sont des mouvements de tangage et les mouvements autour d'un axe parallèle à l'axe Z sont des mouvements de lacet.

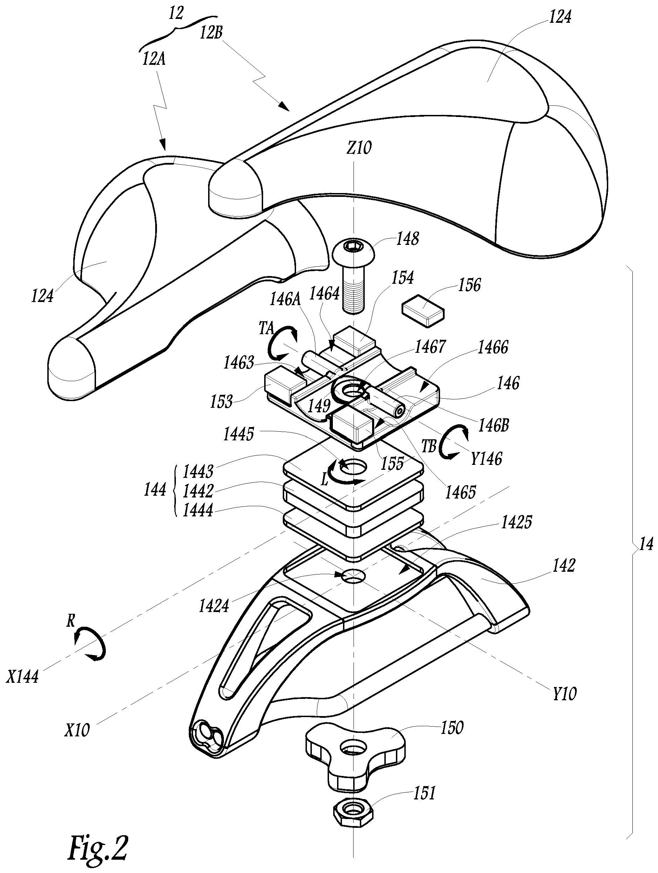

Comme il ressort plus particulièrement des figures 2 à 5, la selle 10 comprend un siège 12 formé de deux sellettes 12A et 12B qui définissent ensemble une surface d'appui pour les fesses d'un utilisateur du vélo 1. On note X10 un axe longitudinal de la selle 10 qui est globalement parallèle à l'axe X. En pratique, l'axe X10 est pratiquement parallèle à l'axe X et, à ce titre, il sera considéré comme un axe de roulis pour la selle 10. On définit un axe Y10 transversal pour la selle 10, cet axe étant pratiquement parallèle à l'axe Y et constituant un axe de tangage pour la selle 10. On considère enfin un axe Z10 perpendiculaire aux axes X10 et Y10 et qui constitue un axe de lacet pour la selle 10, cet axe étant pratiquement parallèle à l'axe Z défini pour le vélo.

Chaque sellette 12A ou 12B comprend une coque 122 rigide, ainsi qu'un rembourrage 124 qui recouvre la coque 122 du côté tourné vers l'utilisateur en configuration d'utilisation de la selle 10. Chaque coque 122 est pourvue d'une oreille 126 percée d'un orifice 128.

La selle 10 comprend également une structure 14 de montage des sellettes 12A et 12B sur le cadre 2. Cette structure comprend elle-même un châssis 142 formé d'une embase 1421 et de deux tiges 1422 et 1423 rapportées sur l'embase 1421 et destinées à coopérer avec une noix de serrage non représentée permettant l'immobilisation du châssis 142 en partie supérieure du tube 2A.

Dans ce qui suit, on considère la selle10 en configuration d'utilisation et une partie est dite supérieure si elle est orientée vers le haut aux figures 1 à 5 et inférieure si elle est orientée vers le bas sur ces figures.

Le châssis 142 est pourvu d'un perçage 1424 aligné sur l'axe Z10 et, en partie supérieure, d'une poche 1425 entourant le perçage 1424 et à section carrée avec coins arrondis

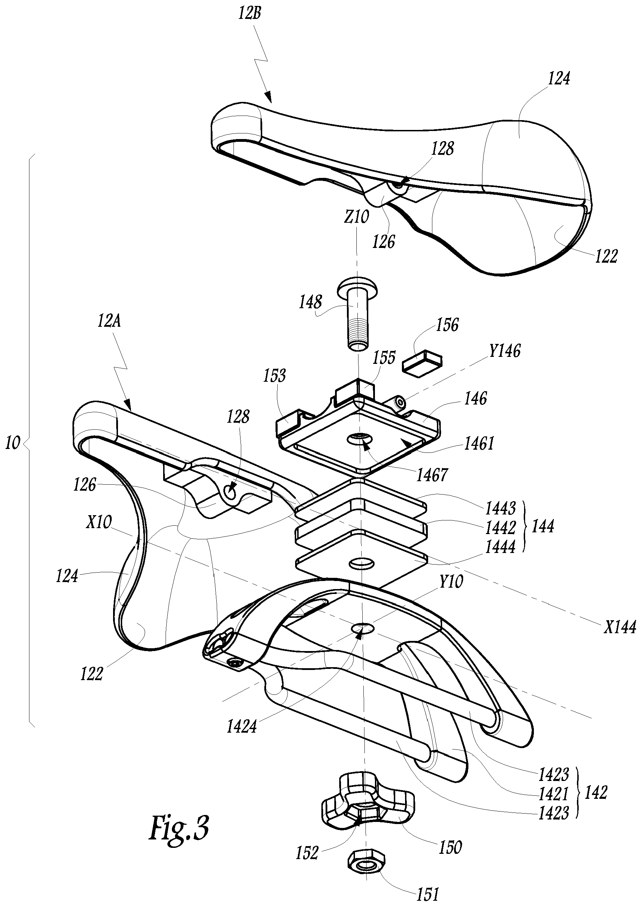

La structure 14 comprend également un bloc élastiquement déformable 144 comprenant une couche 1442 de polyuréthane ou d'élastomère d'épaisseur constante et à section carrée à coins arrondis. Cette couche 1442 est disposée entre deux plaques 1443 et 1444 de métal avec sensiblement la même section que la couche 1442. En variante, ces plaques 1443 et 1444 peuvent être réalisées dans un matériau plastique plus dur que celui de la couche 1442. Les plaques 1443 et 1444 sont respectivement collées ou vulcanisées sur les surfaces supérieure et inférieure de la couche 1442. Le bloc 144 est pourvu d'un perçage central 1445 qui traverse les pièces 1442, 1443 et 1444 et qui est aligné sur l'axe Z10. Aux figures 2 et 3, le bloc 144 est représenté en éclaté. En pratique, comme les plaques 1443 et 1444 sont collées sur la couche 1442, le bloc 144 se présente sous la forme d'un sous-ensemble unitaire. Les plaques 1443 et 1444 sont optionnelles. La section de la poche 1425 est complémentaire de celle du bloc 144.

En variante, la section de la poche 1425, de la couche 1442 et des plaques 1443 et 1444 peut être autre que carrée, par exemple triangulaire.

La structure 14 comprend également un berceau rigide 146, réalisé en métal ou en matériau plastique injecté ou en matériau composite moulé et qui présente, en vue de dessus, une forme extérieure globalement carrée. Ce berceau est pourvu de deux pions 146A, 146B qui sont alignés sur un axe Y146 parallèle à l'axe Y10. Les pions 146A et 146B peuvent être monobloc avec le berceau 146 ou rapportés sur celui-ci, par exemple par collage, insertion ou soudage. Le berceau 146 définit également quatre emplacements 1463 à 1466 sur lesquels sont rapportés des blocs en élastomère 153 à 156.

Aux figures 2 et 3, les blocs 153 à 155 sont représentés en place sur les emplacements 1463 à 1465, alors que le bloc 156 est représenté décalé, le long de l'axe Z10, par rapport à l'emplacement 1466. En configuration montée de la selle 10, les blocs 153 et 154 sont disposés sous la sellette 12A, alors que les blocs 155 et 156 sont disposés sous la sellette 12B.

Le berceau 146 est pourvu d'un perçage central 1467 qui est aligné sur l'axe Z10 en configuration montée de la selle.

Le berceau 146 est également pourvu d'une poche 1461 de forme complémentaire de celle du bloc 144, ménagée sur sa surface inférieure et qui permet de recevoir partiellement le bloc 144, notamment sa plaque supérieure 1443. Ainsi, lorsqu'il est en place entre les éléments 142 et 146, le long de l'axe Z10, le bloc 144 est immobilisé en rotation autour de l'axe Z10, par coopération de formes avec les poches 1425 et 1461, respectivement avec le châssis 142 et avec le berceau 146.

En variante, une poche est prévue seulement dans le châssis 142 ou dans le berceau 146.

La structure 14 comprend également une vis 148, une rondelle 149, éventuellement déformable et une mollette 150 associée à un écrou 151 présentant un taraudage intérieur complémentaire du filetage de la vis 148 et reçu dans un logement à six pans 152 de la molette 150. Ainsi, la molette 150 peut être utilisée pour visser plus ou moins l'écrou 151 sur la vis 148, par simple action manuelle.

En variante, un autre élément de fixation, tel qu'un rivet ou un goujon, peut être utilisé à la place de la vis 148. La rondelle 149 constitue un élément d'arrêt pour la vis 148 et la molette 150 constitue un élément de serrage.

En configuration assemblée de la structure 14, la vis 148 traverse successivement, de haut en bas, la rondelle 149, le perçage 1467 du berceau 146, le perçage 1445 du bloc 144 et le perçage 1424 du châssis 142. L'écrou 151 est vissé sur la partie de la tige 148 qui dépasse en dessous du perçage 1424. Le bloc 144 est alors interposé entre le châssis 142 et le berceau 146.

Dans cette configuration, il est possible de rapporter chacune des sellettes 12A et 12B respectivement sur le pion 146A et sur le pion 146B en engageant les orifices 128 de leurs oreilles 126 autour de ces pions. Des moyens d'arrêt non représentés permettent de retenir axialement les oreilles 126 des sellettes 12A et 12B sur les pions 146A et 146B.

Dans cette configuration montée, les sellettes 12A et 12B sont articulées chacune indépendamment l'une de l'autre, autour de l'axe Y146 qui constitue un axe de tangage commun pour ces sellettes, le mouvement de tangage étant représenté par les doubles flèches TA et TB à la figure 2.

Un mouvement de roulis est possible autour d'un axe X144 parallèle à l'axe X10 et passant par le centre de la couche 1442. Ce mouvement de roulis, représenté par la flèche R à la figure 2, est possible grâce à une déformation en compression du bloc 144 autour de l'axe X144. En effet, une fois immobilisé par coopération de forme dans les poches 1425 et 1461 qui constituent des logements de réception partiel du bloc 144, avec immobilisation en rotation autour de l'axe Z10, le bloc 144 peut être plus ou moins écrasé de part et d'autre du plan défini par les axes X144 et Z10, ce qui autorise un mouvement de basculement ou de rotation autour de l'axe X144, c'est-à-dire un mouvement de roulis.

Par ailleurs, un mouvement de lacet est possible grâce à un une torsion élastique de la couche 1442 du bloc 144 autour de l'axe Z10, comme représenté par la double flèche L à la figure 2.

On comprend que, comme les mouvements de roulis R et de lacet L ont lieu par déformation élastique du même bloc 144. Ces mouvements permettent de donner un certain « rendu » à l'utilisateur lorsque les déplacements de son bassin et de ses jambes induisent de tels mouvements que la selle 10 accompagne. En d'autres termes, le bloc 144 réagit aux mouvements de roulis et de lacet dans les conditions normales d'utilisation de l'assise 10, en offrant une résistance élastique qui ramène par défaut la selle dans une configuration nominale où le siège 12 formé par les sellettes 12A et 12B est symétrique par rapport au plan défini par les axes X10 et Z10. Les mouvements de roulis R et de lacet L sont indépendants l'un de l'autre dans la mesure où l'un de ces mouvements peut avoir lieu sans que l'autre ait lieu.

En outre, comme le bloc 144, plus particulièrement la couche 1442, travaille en compression lors des mouvements de roulis R et en torsion lors des mouvements de lacet L, la réponse élastique du bloc 144 à ces mouvements peut être différenciée, en jouant sur les propriétés du matériau de la couche 1442. La raideur de ce matériau en torsion peut être différente, notamment supérieure, à sa raideur en compression.

Il est possible de modifier la réponse élastique du bloc 144 aux mouvements de roulis R et de lacet L en changeant la forme de la couche 1442. En effet, en jouant sur la géométrie du bloc 144, on peut adapter sa raideur en compression et/ou en torsion. Il est ainsi possible de privilégier une raideur, par exemple la raideur en torsion, pour limiter les mouvements de lacet du berceau par rapport aux mouvements de roulis.

L'utilisation du bloc 144, pour accompagner à la fois les mouvements de roulis R et de lacet L et les amortir, confère à la structure 14 une bonne compacité, tout en gardant l'indépendance entre les deux mouvements.

Les blocs 153 à 156 constituent des butées élastiques au mouvement de rotation des sellettes 12A et 12B autour de l'axe de tangage Y146. On relève à la figure 2 que le berceau 146 est plus épais au niveau des emplacements 1464 et 1466 qu'au niveau des emplacements 1463 et 1465 et que les blocs 153 et 155 sont plus volumineux que les blocs 154 et 156. Ainsi, si les blocs 153 à 156 sont constitués dans le même matériau, les blocs 153 et 155 présentent une souplesse d'ensemble plus importante que les blocs 154 et 156, ce qui permet de donner une réponse différenciée au mouvement de tangage TA ou TB, selon le sens de ce mouvement. Si le tangage a lieu dans un sens d'abaissement de l'extrémité avant des sellettes 12A et 12B, il est amorti de façon plus progressive qu'un tangage vers l'arrière, qui tend à faire remonter ses extrémités avant.

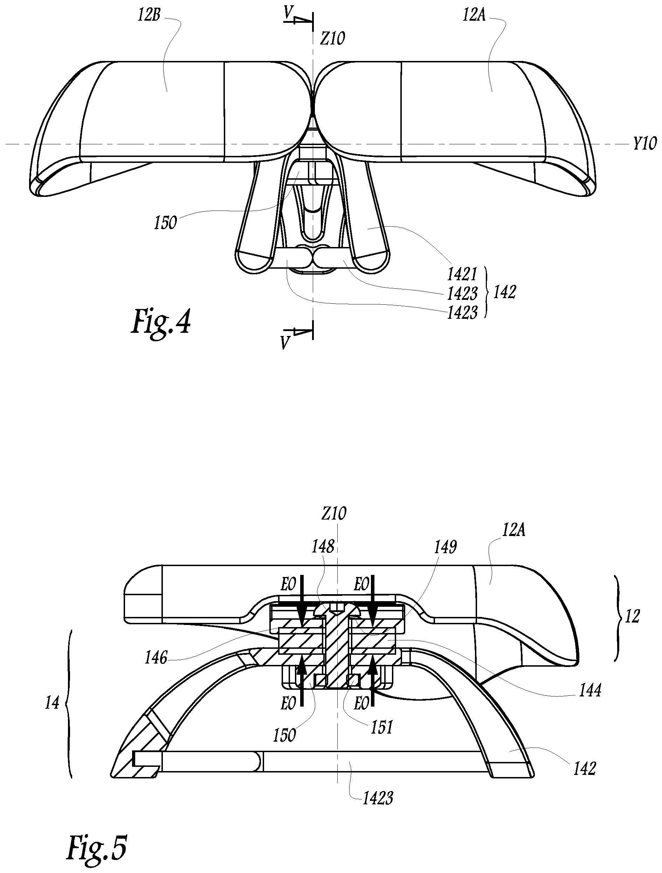

Le comportement du bloc 144 dépend des sollicitations qu'il subit. Or, le montage de la vis 148 à travers l'empilement formé des pièces 149, 146, 144 et 1421 a pour effet d'exercer sur le bloc 144 un effort de compression E0 parallèle à l'axe Z10, comme représenté à la figure 5. Cet effort de compression influe sur la raideur et l'amplitude de déformation de l'élément déformable. Cet effort de compression E0 est réglable en jouant sur le serrage de l'écrou 151 sur la vis 148. Plus l'écrou est serré, c'est-à-dire plus l'effort de compression E0 exercé entre le berceau 146 et le châssis 142 sur le bloc 144 est important, moins ce bloc a tendance à se déformer élastiquement en cas de mouvement du bassin et des jambes de l'utilisateur induisant des mouvements de roulis R ou de lacet L des sellettes 12A et 12B. En d'autres termes, en fonction du serrage de l'écrou 151 sur la vis 148, il est possible de modifier le comportement dynamique du bloc 144, c'est-à-dire la réponse de la selle 10 aux mouvements induits de roulis R et de lacet L résultant des mouvements du bassin et des jambes de l'utilisateur.

On remarque que la modification de l'effort E0 permet de faire varier la réponse du bloc 144 à la fois au mouvement de roulis R et au mouvement de lacet L puisque les propriétés mécaniques de la couche 1442 dépendent de cet effort, à la fois en compression et en torsion. En d'autres termes, on peut, par un unique système de réglage comprimant plus ou moins ce bloc, jouer sur la raideur et l'amplitude des deux mouvements de roulis R et de lacet L.

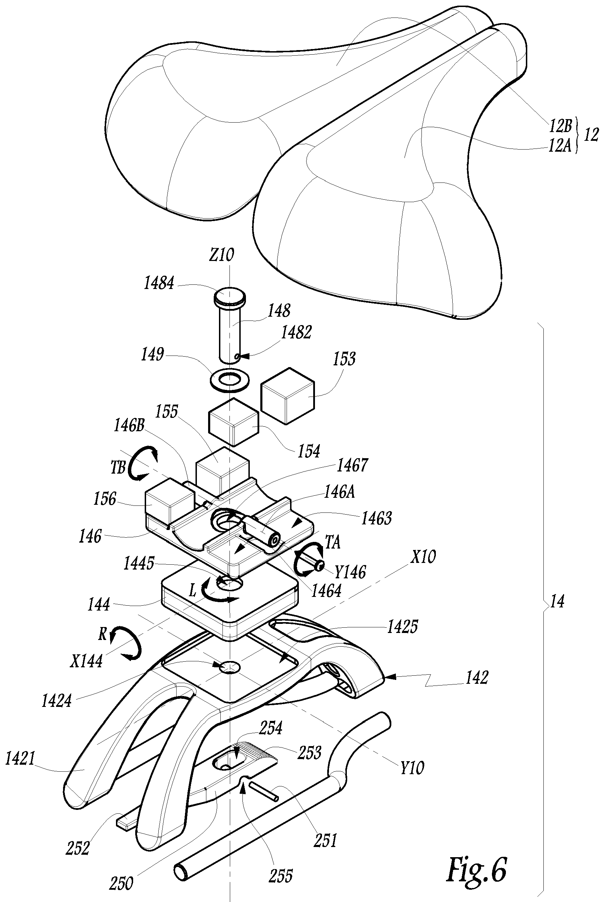

Dans les modes de réalisation représentés aux figures 6 et suivantes, les éléments analogues à ceux du premier mode de réalisation portent les mêmes références. Dans ce qui suit, on ne décrit que ce qui distingue chacun de ces modes de réalisation du premier mode de réalisation.

Dans le mode de réalisation des figures 6 à 8, la mollette 150 et l'écrou 151 du premier mode de réalisation sont remplacés par un levier 250 qui est en appui sur une goupille 251 engagée dans l'axe épaulé 148. Le levier 250 est pourvu d'une extrémité arrière 252 par laquelle il est sensé être manipulé, ainsi que de crans 253 qui s'étendent parallèlement à l'axe Y10.

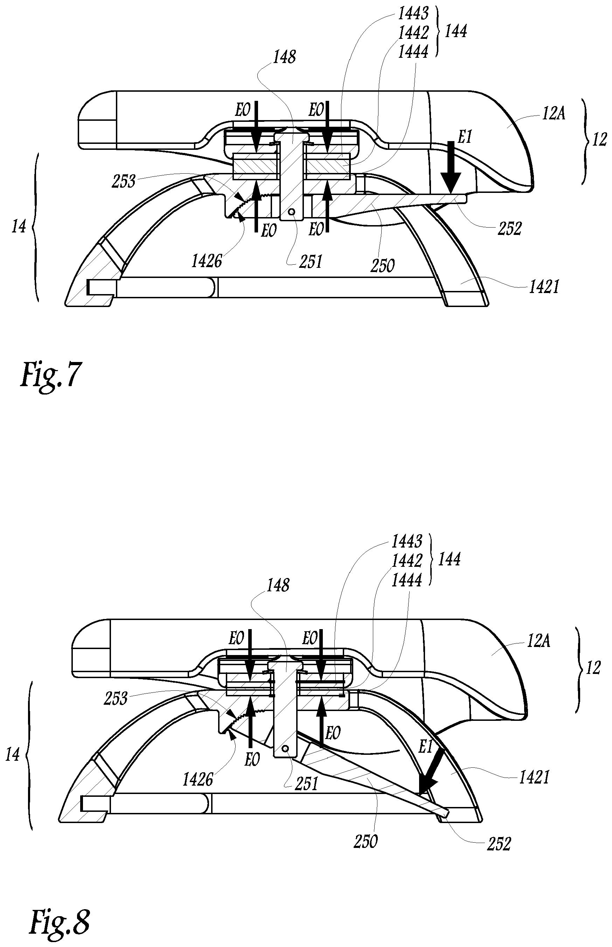

Ces crans sont de forme complémentaire de crans 1426 ménagés sur la surface inférieure de l'embase 1421 du châssis 142, en dessous de la poche 1425. Par ailleurs, le levier 250 est pourvu d'une ouverture centrale 254 qui est oblongue dont la plus grande dimension est parallèle à l'axe X10 et qui est destinée au passage de l'extrémité inférieure de l'axe épaulé 148. Il est ainsi possible, en exerçant un effort E1 sur l'extrémité 252 du levier 250, d'abaisser cette extrémité, ce qui a pour effet déplacer le levier 250 de la position de la figure 7 vers la position de la figure 8, ou vers une position intermédiaire entre celles des figures 7 et 8, en décalant les crans 253 par rapport aux crans 1426, ces crans demeurant en prise les uns avec les autres. Ainsi, le mouvement du levier 250 à partir de la position de la figure 7 et vers la position de la figure 8 a pour effet d'abaisser, par rapport à l'embase 1421, la goupille 251 qui est en appui dans des encoches 255 du levier 250 et de tirer ainsi vers le châssis 142 la tête 1484 de l'axe épaulé 148 en augmentant l'intensité de l'effort E0 de compression exercé sur le bloc 144 par le berceau 146, d'une part, et par le châssis 142, d'autre part.

Par rapport au cas de la mollette 150 et de l'écrou 151 du premier mode de réalisation qui permettent un ajustement continu de l'intensité de l'effort de compression E0, le levier 250 permet un ajustement incrémentiel en fonction des différentes positions qui peuvent être obtenues par la coopération des crans 253 et 1426.

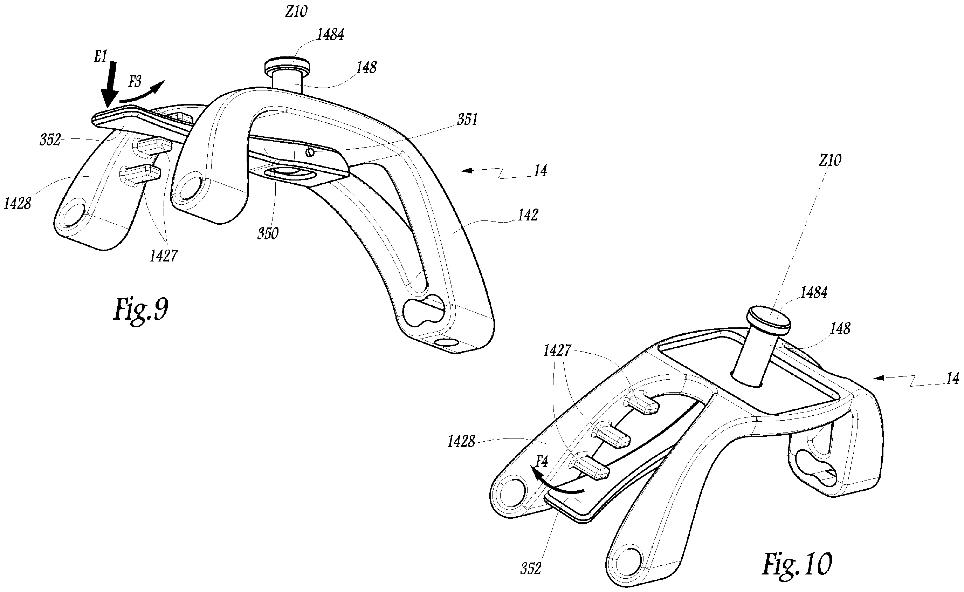

Dans le troisième mode de réalisation représenté partiellement aux figures 9 et 10, on utilise également un levier 350 associé à une goupille 351 et dont une extrémité 352 est destinée à être manipulée par un utilisateur. L'immobilisation en position du levier 350 par rapport au châssis 142 a lieu en amenant en prise ce levier avec des barreaux 1427 prévus sur l'une des jambes 1428 du châssis 142. A partir de la configuration de la figure 9 où l'effort de compression exercé sur le bloc 144, qui n'est pas représenté, est minimal, si l'on souhaite augmenter cet effort de compression, on fait pivoter le levier 350 dans le sens de la flèche F3, autour de l'axe Z10 sur lequel est aligné l'axe épaulé 148. Ceci a pour effet de dégager le levier 350 des différents barreaux 1427. Il est alors possible d'exercer sur l'extrémité 352 un effort E2 qui abaisse cette extrémité. Lorsqu'une inclinaison satisfaisante du levier 350 a été obtenue, il est possible de ramener le levier 350 en prise avec certains des barreaux 1427 par un mouvement de rotation autour de l'axe Z10, dans le sens de la flèche F4 opposé à celui de la flèche F3. Ainsi, en faisant varier l'inclinaison du levier 350 autour de la goupille 351, il est possible de décaler cette goupille par rapport au châssis 142, le long de l'axe Z10, et d'ajuster l'effort de compression exercé par la tête 1484 de l'axe épaulé 148 sur le bloc élastiquement déformable 144, à travers le berceau, ces éléments n'étant pas représentés mais analogues à ceux du deuxième mode de réalisation.

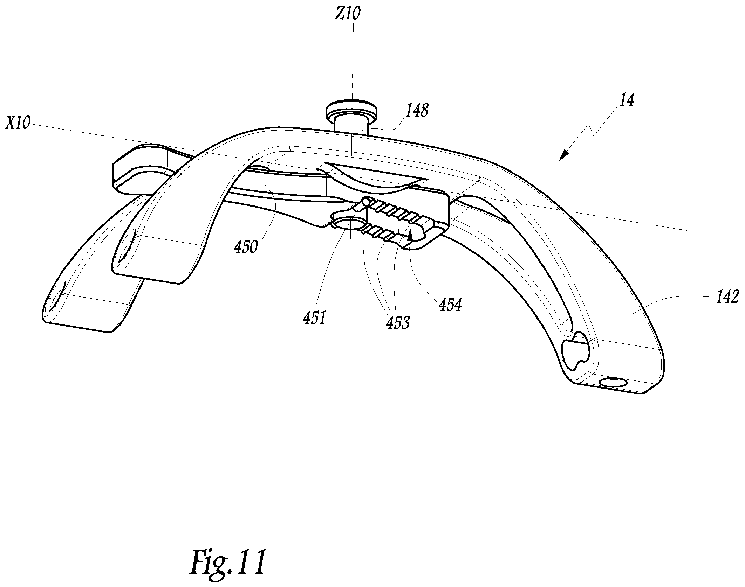

Dans le quatrième mode de réalisation représenté aux figures 11 à 13, on utilise un levier 450 en forme de tirette qui comprend une lumière oblongue 454 dont la plus grande dimension est parallèle à l'axe X10 et dans laquelle est engagée l'extrémité inférieure d'un axe épaulé 148 analogue à celui du deuxième mode de réalisation et qui est traversée transversalement par une goupille 451. Sur sa surface inférieure opposée au bloc 144, qui n'est pas représenté, le levier 450 est pourvu de cannelures 453 qui définissent entre elles des zones de réception de la goupille 451.

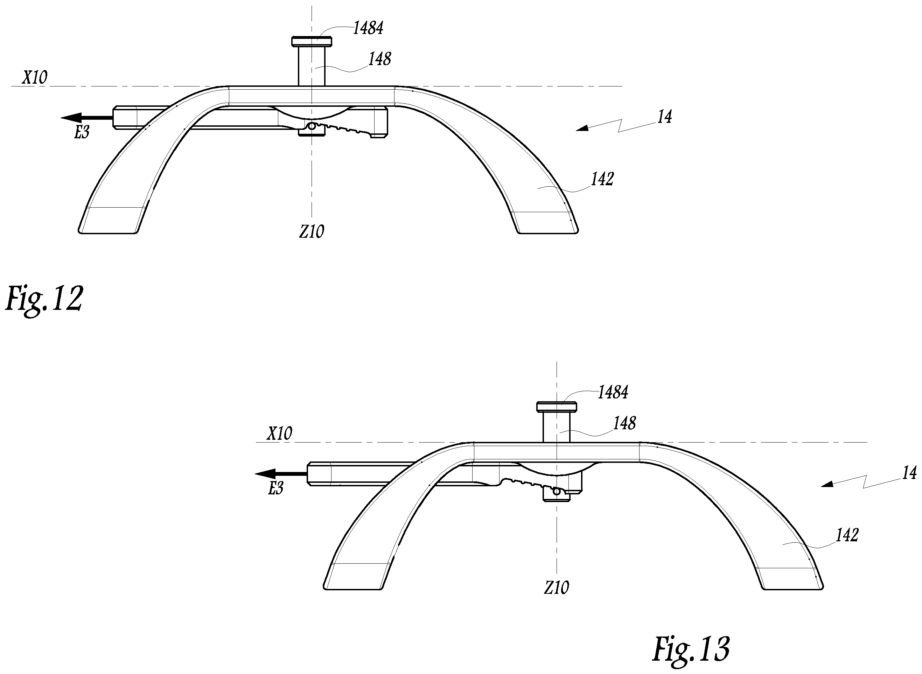

Comme cela ressort de la comparaison des figures 12 et 13, il est possible de régler la position de la tête 1484 de l'axe épaulé 148 par rapport au châssis 142 en exerçant un effort de traction E3 pour tirer plus ou moins sur le levier 450 et amener la goupille 451 dans une des positions définies par les cannelures 453. Ce déplacement plus ou moins prononcé de la tête 1484 vers le bas a pour effet d'augmenter plus ou moins l'effort de compression exercé sur le bloc élastiquement déformable 144, qui n'est pas représenté.

Dans les troisième et quatrième modes de réalisation, le réglage de l'effort de compression est incrémentiel.

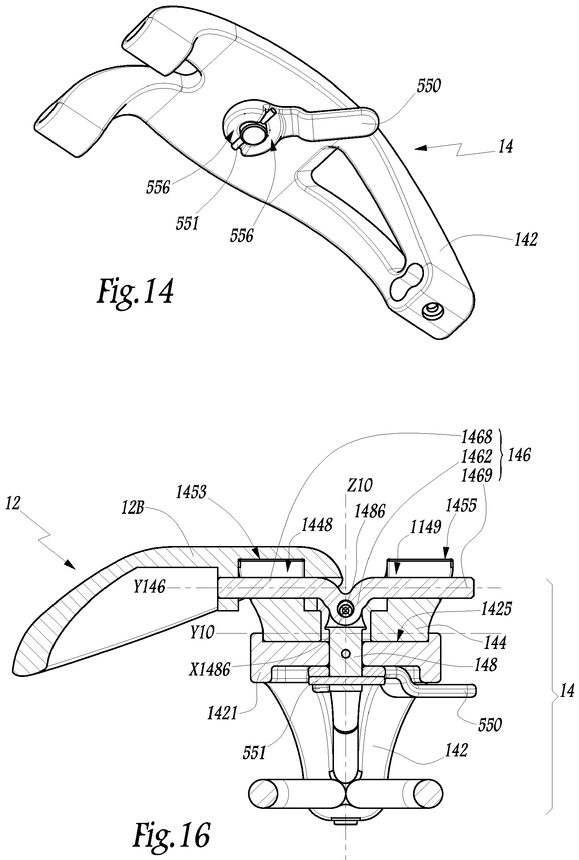

Dans le cinquième mode de réalisation représenté aux figures 14 à 16, on utilise un levier 550 qui est rotatif autour de l'axe Z10 et qui est pourvu de deux surfaces de came 556 en appui contre une goupille 551 disposée de façon transversale en partie basse d'un axe épaulé 148. En fonction de la position angulaire du levier 550 autour de l'axe Z10, les surfaces de came 556 déplacent plus ou moins la goupille 551 par rapport au châssis 142 de long de l'axe Z10, ce qui a pour effet de faire augmenter ou diminuer de façon continue l'effort de compression exercé sur le bloc élastiquement déformable 144.

Dans ce cinquième mode de réalisation, le berceau 146 est formé par une tige cintrée et articulée autour d'un doigt 1486 monté parallèle à l'axe X10, en partie supérieure de l'axe épaulé 148 qui traverse entre autres le perçage central 1424 du châssis 142. Le berceau 156 comprend ainsi une boucle centrale 1462 entourant le doigt 1486 et deux bras 1468 et 1469 qui s'étendent de part et d'autre du doigt 1486 et qui sont respectivement disposés dans deux gorges 1448 et 1449 ménagées dans le bloc 144. Les bras 1468 et 1469 sont en appui sur le fond des gorges 1448 et 1449 et remplissent la fonction des pions 146A et 146B du premier mode de réalisation. En d'autres termes, ces bras définissent, avec des oreilles ménagées sous les sellettes 12A et 12B, des moyens d'articulation en tangage autour d'un axe de tangage Y146. L'axe central X1486 du doigt 1486 constitue un axe de roulis et le mouvement de roulis du berceau 146 est amorti par le bloc 144 puisque les bras 1468 et 1469 sont en appui sur le fond des gorges 1448 et 1449.

Le bloc 144 est engagé dans une poche 1425 ménagée en partie supérieure de l'embase 1421 du châssis 142, comme dans le premier mode de réalisation.

Un mouvement de roulis autour de l'axe X10 est amorti par le fait que les bras 1468 et 1469 s'appuient contre les fonds des gorges 1448 et 1449.

Un mouvement de lacet autour de l'axe Z10 est, quant à lui, amorti par le contact des bras 1468 et 1469 avec les côtés des gorges 1448 et 1449. De part et d'autre de chaque gorge 1448 et 1449, le bloc 144 forme deux massifs que les bras 1468 et 1469 tendent à cisailler lorsque le berceau 146 tend à tourner autour de l'axe Z10 qui est confondu avec l'axe longitudinal de l'axe épaulé 148.

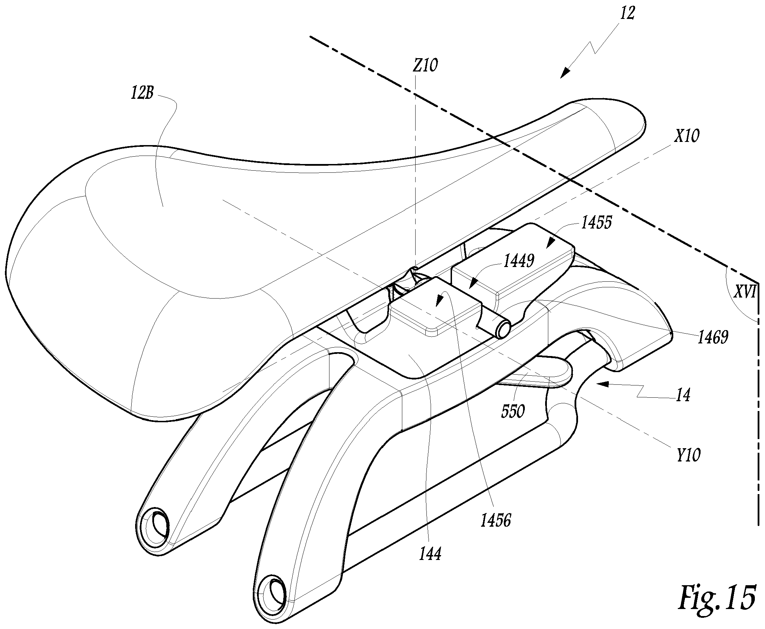

La surface supérieure du bloc 144 définit quatre plateaux, dont deux sont visibles à la figure 15 avec les références 1455 et 1456 et dont un troisième est visible à la figure 16 avec la référence 1453 et qui assurent la même fonction que les blocs 153 à 156 du premier mode de réalisation. En d'autres termes, dans ce mode de réalisation, les butées élastiques qui limitent les mouvements de pivotement en tangage des sellettes 12A et 12B autour de l'axe Y146 sont monoblocs avec le reste du bloc 144 puisqu'il s'agit des surfaces supérieures de ce bloc.

En variante à ce cinquième mode de réalisation, il est possible de prévoir que le berceau 146 est formé de deux bras qui ne se rejoignent pas au niveau de l'axe épaulé 148 mais qui sont coincés dans des logements formés par le bloc élastiquement déformable 144, ce qui leur permet d'exercer sur ce bloc des efforts de compression, lors d'un mouvement de roulis, et de torsion, lors d'un mouvement de lacet, comme les bras 1468 et 1469 du cinquième mode de réalisation

Dans les modes de réalisation décrits ci-dessus, un unique bloc élastiquement déformable 144 est utilisé. En variante, quel que soit le mode de réalisation, plusieurs blocs élastiquement déformables, tels que les blocs 144 mentionnés ci-dessus, peuvent être interposés entre le berceau 146 et le châssis 142. Ces blocs sont alors empilés et alignés selon l'axe de lacet. Dans ce cas, les moyens de réglage de l'effort de compression E0 sont adaptés. Cet effort de compression peut être exercé de façon groupée ou, au contraire, individuellement sur ces blocs

L'invention a été représentée dans le cas où l'élément élastiquement déformable, qui travaille à la fois en compression, en torsion est constitué par une feuille ou un bloc de matériau synthétique, en particulier du polyuréthane ou un élastomère. D'autres matériaux peuvent être envisagés pour cet élément élastiquement déformable par exemple un matériau plastique ou un composite.

Selon un mode de réalisation non représenté de l'invention, l'élément élastiquement déformable 144 peut être sélectionné dans un jeu d'éléments élastiquement déformables interchangeables, dont les propriétés mécaniques diffèrent l'une à l'autre, en particulier leur dureté. Par exemple, ces différents éléments peuvent être réalisés dans des matériaux différents. Il est ainsi possible de sélectionner l'élément élastiquement déformable 144 pour obtenir une réponse aux mouvements de roulis R et de lacet L différentiée, en fonction des choix de l'utilisateur. En particulier, l'amplitude maximale admissible des mouvements de roulis et de lacet peut être réglée en choisissant l'élément élastiquement déformable 144 intégré à l'assise 10. Un réglage fin du comportement mécanique de cet élément élastiquement déformable 144 demeure possible par le réglage de l'effort de composition E0. Cette approche permet de répondre au mieux aux différences de morphologie et d'habitude des utilisateurs de l'assise 10.

L'invention est représentée sur les figures dans le cas de son utilisation avec un vélo de route. Elle est toutefois applicable avec tout type de vélo, notamment de type vélo de ville ou hollandais, VTT ou cycle ergomètre, parfois dénommé « vélo d'appartement ». De plus cette invention peut trouver des applications dans le domaine des sièges de travail où l'on recherche de la mobilité dans un espace restreint. Ceci concerne, par exemple, les assises utilisées dans certains postes de travail où l'opérateur se tient dans une position semi-debout.

Les caractéristiques techniques des modes de réalisation et variantes envisagés ci-dessus peuvent être combinées entre elles.

## Revendications

1. Assise (10), notamment pour vélo, comprenant deux sellettes (12A, 12B) et une structure (14) de montage des sellettes par rapport à un cadre (2), cette structure comportant un châssis (142) destiné à être fixé sur le cadre et des moyens (126, 146A, 146B) d'articulation (TA, TB) de chaque sellette indépendamment de l'autre sellette par rapport au châssis, autour d'un axe de tangage (Y146) supporté ou formé par un berceau (146) pourvu de deux pions (146A, 146B) alignés sur l'axe de tangage et sur lesquels les sellettes (12A, 12B) sont articulées, **caractérisée en ce que** le berceau (146) est monté sur le châssis (142) avec interposition d'au moins un élément élastiquement déformable (144), disposé entre le châssis (142) et le berceau (146) le long d'un axe de lacet (Z10) de l'assise (10) et apte à se déformer élastiquement, en compression lors d'un mouvement de roulis (R) du berceau (146) par rapport au châssis (142) et en torsion ou cisaillement lors d'un mouvement de lacet (L) du berceau par rapport au châssis, ces mouvements (R, L) étant indépendants l'un de l'autre et induits par les déplacements du bassin et des jambes d'un utilisateur.

2. Assise selon la revendication 1, **caractérisée en ce que** l'élément (144) interposé entre le berceau (146) et le châssis (148) comprend une couche (1442) de matériau synthétique ou composite, notamment de polyuréthane ou d'élastomère, disposée entre deux plaques (1443, 1444) de rigidité supérieure à celle de la couche de matériau synthétique.

3. Assise selon la revendication 1, **caractérisée en ce que** l'élément (144) interposé entre le berceau (146) et le châssis (148) comprend deux gorges (1448, 1449) de réception de parties (1468, 1469) du berceau et **en ce que** des massifs ménagés de part et d'autre de chaque gorge travaillent en cisaillement lors des mouvements de lacet (L).

4. Assise selon l'une des revendications précédentes, **caractérisée en ce que** le mouvement de rotation de chaque sellette (12A, 12B), autour de l'axe de tangage (Y146) et par rapport au berceau (146), est limité par une butée souple (153-156 ; 1453, 1455, 1456) dans chaque sens de rotation.

5. Assise selon la revendication 4 **caractérisée en ce que** les butées (153-156) limitant la rotation d'une sellette dans les deux sens ont des duretés différentes.

6. Assise selon l'une des revendications 4 ou 5 **caractérisée en ce que** les butées souples (153-156) sont rapportées sur le berceau.

7. Assise selon l'une des revendications 4 ou 5, **caractérisée en ce que** les butées souples (1453, 1455, 1456) sont monobloc avec l'élément élastiquement déformable (144).

8. Assise selon l'une des revendications précédentes, **caractérisée en ce que** l'élément élastiquement déformable est soumis à un effort de compression (E0) parallèle à l'axe de lacet (Z10) et **en ce que** la structure de montage (14) comprend des moyens (150, 151 ; 250 ; 350 ; 450 ; 550) de réglage de cet effort de compression.

9. Assise selon la revendication 8 **caractérisée en ce que** les moyens de réglage (150, 151, 550) permettent un ajustement continu de l'effort de compression (E0).

10. Assise selon la revendication 8, **caractérisée en ce que** les moyens de réglage (250 ; 350 ; 450) comprennent des moyens (253, 1426 ; 1427 ; 453) d'ajustement incrémentiel de l'effort de compression (E0).

11. Assise selon l'une des revendications précédentes, **caractérisée en ce que** l'élément élastiquement déformable (144) est immobilisé, en rotation autour d'un axe de lacet (Z10), par coopération de formes avec le châssis (142) et/ou avec le berceau (146).

12. Assise selon la revendication 11, **caractérisée en ce que** le châssis (142) et/ou le berceau (146) est pourvu d'un logement (1425, 1461) de réception partielle et de coincement de l'élément élastiquement déformable (144), en rotation autour de l'axe de lacet (Z10), ce logement étant de forme complémentaire de celle de l'élément élastiquement déformable.

13. Assise selon l'une des revendications précédentes, **caractérisée en ce que** l'élément élastiquement déformable (144) est sélectionné dans un jeu d'éléments élastiquement déformables dont les propriétés mécaniques sont différentes.

## Patentansprüche

1. Sitz (10), insbesondere für ein Fahrrad, umfassend zwei Sättel (12A, 12B) und eine Montagestruktur (14) zum Montieren der Sättel bezogen auf einen Rahmen (2), wobei diese Montagestruktur Folgendes aufweist: ein Fahrgestell, das dazu bestimmt ist, auf dem Rahmen befestigt zu werden, und Mittel (126, 146A, 146B) zum Anlenken (TA, TB) eines jeden Sattels unabhängig vom jeweils anderen Sattel, bezogen auf das Fahrgestell, um eine Nickachse (Y146) , wobei die Nickachse (Y146) von einer Wippe (146) gestützt oder gebildet ist, welche zwei Stifte (146A, 146B) aufweist, die mit der Nickachse fluchten und auf denen die Sättel (12A, 12B) angelenkt sind, **dadurch gekennzeichnet,**
**dass** die Wippe (146) mit zumindest einem dazwischengeschalteten elastisch verformbaren Element (144) auf dem Fahrgestell (142) befestigt ist, wobei das elastisch verformbare Element (144) entlang einer Gierachse (Z10) des Sitzes (10) zwischen dem Fahrgestell (142) und der Wippe (146) angeordnet ist und ausgelegt ist, um unter Druck bei einer Rollbewegung (R) der Wippe (146) bezogen auf das Fahrgestell (142) und bei Verdrehung oder Scherung bei einer Gierbewegung (L) der Wippe bezogen auf das Fahrgestell elastisch verformbar zu sein, wobei die Bewegungen (R, L) voneinander unabhängig sind und durch die Verlagerung des Beckens und der Beine des Nutzers verursacht werden.

2. Sitz nach Anspruch 1,
**dadurch gekennzeichnet,**
**dass** das zwischen der Wippe (146) und dem Fahrgestell (148) zwischengeschaltete Element (144) eine Schicht (1442) aus einem Synthetik- oder Verbundmaterial, insbesondere Polyurethan oder Elastomer, aufweist, wobei die Schicht (1442) zwischen zwei Platten (1443, 1444), welche eine höhere Steifheit aufweisen als die Schicht aus Synthetikmaterial, angeordnet ist.

3. Sitz nach Anspruch 1,
**dadurch gekennzeichnet,**
**dass** das zwischen der Wippe (146) und dem Fahrgestell (148) zwischengeschaltete Element (144) zwei Einschnitte (1448, 1449) zur Aufnahme von Abschnitten (1468, 1469) der Wippe aufweist und dass Erhebungen auf beiden Seiten des jeweiligen Einschnitts während der Gierbewegung (L) Scherkräfte bewirken.

4. Sitz nach einem der vorangehenden Ansprüche,
**dadurch gekennzeichnet,**
**dass** die Rotationsbewegung des jeweiligen Sattels (12A, 12B) um die Nickachse (Y146) und bezogen auf die Wippe (146) durch einen flexiblen Anschlag (153 - 156; 1453, 1455, 1456) in jeder Rotationsrichtung begrenzt ist.

5. Sitz nach Anspruch 4,
**dadurch gekennzeichnet,**
**dass** die die Rotation eines Sattels in beide Richtungen begrenzenden Anschläge (153 - 156) unterschiedliche Härtegrade aufweisen.

6. Sitz nach Anspruch 4 oder 5,
**dadurch gekennzeichnet,**
**dass** die flexiblen Anschläge (153 - 156) auf der Wippe aufgebracht sind.

7. Sitz nach Anspruch 4 oder 5,
**dadurch gekennzeichnet,**
**dass** die flexiblen Anschläge (1453, 1455, 1456) einstückig mit dem elastisch verformbaren Element (144) ausgebildet sind.

8. Sitz nach einem der vorangehenden Ansprüche,
**dadurch gekennzeichnet,**
**dass** das elastisch verformbare Element parallel zur Gierachse (Z10) mit Druck (E0) beaufschlagbar ist und dass die Montagestruktur (14) Regelungsmittel (150, 151; 250; 350; 450; 550) zum Regeln der Druckbeaufschlagung aufweist.

9. Sitz nach Anspruch 8,
**dadurch gekennzeichnet,**
**dass** die Regelungsmittel (150, 151, 550) eine durchgängige Anpassung der Druckbeaufschlagung (E0) ermöglichen.

10. Sitz nach Anspruch 8,
**dadurch gekennzeichnet,**
**dass** die Regelungsmittel (250; 350; 450) Mittel (253, 1426; 1427; 453) zum stufenweisen Anpassen der Druckbeaufschlagung (E0) aufweisen.

11. Sitz nach einem der vorangehenden Ansprüche,
**dadurch gekennzeichnet,**
**dass** das elastisch verformbare Element (144) in seiner Rotation um die Gierachse (Z10) in formschlüssigem Zusammenwirken mit dem Fahrgestell (142) und/oder der Wippe (146) blockiert ist.

12. Sitz nach Anspruch 11,
**dadurch gekennzeichnet,**
**dass** das Fahrgestell (142) und/oder die Wippe (146) mit einer Aufnahme (1425, 1461) zum teilweisen Aufnehmen und Verklemmen des elastisch verformbaren Elements (144) in seiner Rotation um die Gierachse (Z10) versehen ist, wobei die Aufnahme formkomplementär zu dem elastisch verformbaren Element ausgebildet ist.

13. Sitz nach einem der vorangehenden Ansprüche,
**dadurch gekennzeichnet,**
**dass** das elastisch verformbare Element (144) aus einem Satz von elastisch verformbaren Elementen, deren mechanische Eigenschaften unterschiedlich sind, ausgewählt ist.

## Claims

1. Seat (10), in particular for a bicycle, comprising two saddles (12A, 12B) and a structure (14) for assembling the saddles in relation to a frame (2), wherein this structure comprises a mounting (142) intended to be fixed onto the frame and devices (126, 146A, 146B) for articulating (TA, TB) each saddle independently of the other saddle in relation to the mounting around a pitch axis (Y146) supported or formed by a cradle (146) provided with two pins (146A, 146B) aligned to the pitch axis and on which the saddles (12A, 12B) are articulated, **characterised in that** the cradle (146) is mounted on the mounting (142) with at least one elastically deformable element (144) interposed, which is arranged between the mounting (142) and the cradle (146) along a yaw axis (Z10) of the seat (10) and is able to deform elastically in compression during a roll movement (R) of the cradle (146) in relation to the mounting (142) and in torsion or shear during a yaw movement (L) of the cradle in relation to the mounting, wherein these movements (R, L) are independent of one another and caused by the displacements of the pelvis and legs of a user.

2. Seat according to claim 1, **characterised in that** the element (144) interposed between the cradle (146) and the mounting (148) comprises a layer (1442) of synthetic or composite material, in particular polyurethane or elastomer, arranged between two plates (1443, 1444) with a higher rigidity than that of the layer of synthetic material.

3. Seat according to claim 1, **characterised in that** the element (144) interposed between the cradle (146) and the mounting (148) comprises two recesses (1448, 1449) to receive parts (1468, 1469) of the cradle and **in that** blocks arranged on either side of each recess shear during yaw movements (L).

4. Seat according to one of the preceding claims, **characterised in that** the rotational movement of each saddle (12A, 12B) around the pitch axis (Y146) and in relation to the cradle (146) is limited by a flexible stop (153-156; 1453, 1455, 1456) in each direction of rotation.

5. Seat according to claim 4, **characterised in that** the stops (153-156) limiting the rotation of a saddle in both directions are of different hardness.

6. Seat according to one of claims 4 or 5, **characterised in that** the flexible stops (153-156) are attached to the cradle.

7. Seat according to one of claims 4 or 5, **characterised in that** the flexible stops (1453, 1455, 1456) are integral to the elastically deformable element (144).

8. Seat according to one of the preceding claims, **characterised in that** the elastically deformable element is subjected to a compression force (E0) parallel to the yaw axis (Z10) and **in that** the assembly structure (14) comprises means (150, 151; 250; 350; 450; 550) for regulating this compression force.

9. Seat according to claim 8, **characterised in that** the regulating means (150, 151, 550) enable continuous adjustment of the compression force (E0).

10. Seat according to claim 8, **characterised in that** the regulating means (250; 350; 450) comprise means (253, 1426; 1427; 453) for adjusting the compression force (E0) incrementally.

11. Seat according to one of the preceding claims, **characterised in that** the elastically deformable element (144) is locked in rotation around a yaw axis (Z10) by interlocking with the mounting (142) and/or with the cradle (146).

12. Seat according to claim 11, **characterised in that** the mounting (142) and/or the cradle (146) is provided with a slot (1425, 1461) to partially receive and block the elastically deformable element (144) in rotation around the yaw axis (Z10), wherein this slot has a shape complementary to that of the elastically deformable element.

13. Seat according to one of the preceding claims, **characterised in that** the elastically deformable element (144) is selected from a set of elastically deformable elements that have different mechanical properties.
